# FASCICULE DE BREVET EUROPEEN

(11) **EP 4 051 476 B1**
(45) Date de publication et mention de la délivrance du brevet: **29.11.2023**
(21) Numéro de dépôt: 20807474.0
(22) Date de dépôt: 23.10.2020
(51) Int. Cl.: B29B 11/16, D03D 25/00, F01D 5/28, B29L 31/08

(54) **PREFORME FIBREUSE TISSEE POUR REALISER UNE PIECE EN MATERIAU COMPOSITE, NOTAMMENT UNE AUBE DE TURBOMACHINE**
GEWEBTE FASERIGE VORFORM ZUM HERSTELLEN EINES VERBUNDTEILS, INSBESONDERE EINER TURBOMASCHINENSCHAUFEL
WOVEN FIBROUS PREFORM FOR PRODUCING A COMPOSITE PART, ESPECIALLY A TURBOMACHINE BLADE

(30) Priorité: 29.10.2019 FR 1912135
(43) Date de publication de la demande: 07.09.2022
(73) Titulaire: SAFRAN, 75015 Paris (FR)
(72) Inventeur: MARCHAL, Yann, Didier, Simon, 77550 MOISSY-CRAMAYEL (FR); COUPE, Dominique, Marie, Christian, 77550 MOISSY-CRAMAYEL (FR)
(74) Mandataire: Cabinet Beau de Loménie
(86) Numéro de dépôt international: PCT/FR2020/051923
(87) Numéro de publication internationale: WO 2021/084192

(56) Documents cités:
- WO-A1-2019/097147
- DE-B3-102011 084 472

## Description

### Domaine Technique

La présente invention se rapporte au domaine général des pièces en matériau composite. Plus précisément, l'invention se rapporte à une préforme fibreuse pour former une pièce en matériau composite raidie, et son application à la fabrication d'une aube de turbomachine aéronautique.

### Technique antérieure

De façon bien connue, une pièce en matériau composite peut être obtenue par réalisation d'une préforme fibreuse et densification de la préforme par une matrice. Selon l'application envisagée, la préforme peut être en fibres de verre, carbone ou céramique, et la matrice peut être en un matériau organique (polymère), en carbone ou en céramique.

Pour les pièces de forme relativement complexe, il est connu de réaliser une structure fibreuse ou ébauche en une seule pièce par tissage tridimensionnel (3D) ou multicouches et de mettre en forme la structure fibreuse pour obtenir une préforme fibreuse ayant une forme voisine de celle de la pièce à fabriquer.

Dans le domaine de la fabrication d'aubes de turbomachine en matériau composite, on cherche toujours à augmenter la tenue mécanique de l'aube tout en réduisant sa masse. S'il est aujourd'hui possible de fabriquer des aubes creuses en matériau composite à partir d'une préforme fibreuse tissée en une seule pièce, leur raideur doit toujours être améliorée, notamment lorsqu'il s'agit d'aubes directrices d'entrée ou de sortie (IGV ou OGV).

Le document WO 2019/097147 A1 divulgue en figure 2 une préforme fibreuse destinée à former le renfort fibreux d'une pièce en matériau composite à renfort fibreux densifié par une matrice, la préforme fibreuse étant en une seule pièce et obtenue par tissage tridimensionnel d'une pluralité de fils ou torons longitudinaux s'étendant dans une direction correspondant à la direction longitudinale de la pièce avec une pluralité de fils ou torons transversaux.

Ainsi, il existe toujours un besoin pour une préforme fibreuse en une seule pièce qui permette d'obtenir des pièces en matériau composite conciliant une masse réduite et une raideur améliorée.

### Exposé de l'invention

Selon un aspect de l'invention, ce but est atteint par une préforme fibreuse destinée à former le renfort fibreux d'une pièce en matériau composite à renfort fibreux densifié par une matrice, la préforme fibreuse étant en une seule pièce et obtenue par tissage tridimensionnel d'une pluralité de fils ou torons longitudinaux s'étendant dans une direction correspondant à la direction longitudinale de la pièce avec une pluralité de fils ou torons transversaux, la préforme comprenant une première peau, une deuxième peau, et une portion centrale reliant la première peau à la deuxième peau, la portion centrale étant destinée à former un élément de raidissement de la pièce le long de la direction longitudinale, caractérisée en ce que, dans un plan transversal de la préforme :
- des fils ou torons transversaux de la première peau et de la deuxième peau sont tissés par paires dans la première peau et dans la deuxième peau de part et d'autre de la portion centrale,
- les fils ou torons d'au moins une première paire de fils ou torons transversaux de la première peau sont séparés en deux fils ou torons unitaires au niveau de la portion centrale, lesdits fils ou torons unitaires étant tissés séparément avec des fils ou torons longitudinaux dans ladite portion,
- les fils ou torons d'au moins une deuxième paire de fils ou torons transversaux de la deuxième peau sont séparés en deux fils ou torons unitaires au niveau de la portion centrale, lesdits fils ou torons unitaires étant tissés séparément avec des fils ou torons longitudinaux dans ladite portion, et
- au moins un fil ou toron de la première paire et au moins un fil ou toron de la deuxième paire se croisent au moins deux fois dans la portion centrale.

Par « tissage tridimensionnel », « tissage 3D », « tissage multicouches » on entend ici un mode de tissage par lequel certains au moins des fils de chaîne (ou fils longitudinaux) lient des fils de trame (ou fils transversaux) sur plusieurs couches de trame. Un tel tissage peut être réalisé dans un métier à tisser de type jacquard, de façon connue en soi.

La préforme fibreuse selon l'invention présente l'avantage d'être réalisable en une seule étape de tissage, et de présenter une portion centrale qui servira, lorsque la préforme constitue le renfort fibreux d'une pièce en matériau composite, d'élément de raidissement le long d'une direction longitudinale de la pièce. La portion centrale est ainsi formée à partir de paires de fils ou torons transversaux qui sont dédoublées (séparées) en fils ou torons unitaires tissés ensuite séparément avec des fils ou torons longitudinaux qui sont ajoutés au niveau de la portion centrale. Par ce mode de tissage à partir de paires dédoublées, la portion centrale est ainsi liée par tissage aux peaux, ce qui assure une bonne tenue de l'ensemble. En outre, il n'est pas nécessaire d'insérer des fils ou torons transversaux pour réaliser la portion centrale, ce qui simplifie le tissage de la préforme. Le croisement de fils ou torons longitudinaux provenant de la première et de la deuxième peau permet d'assurer la liaison par tissage des peaux avec la portion centrale, tout en augmentant la tenue mécanique de l'ensemble.

Dans un exemple de réalisation, au moins une partie des fils ou torons longitudinaux présents dans la portion centrale peut présenter un titre supérieur au titre des fils ou torons longitudinaux présents dans la première et la deuxième peau. Cette caractéristique permet d'augmenter la raideur de l'élément de raidissement qui sera formé à partir de la portion centrale lorsque la préforme sera densifiée pour former une pièce en matériau composite. Par exemple le titre des fils ou torons longitudinaux dans les peaux peut être inférieur ou égal à 24k, et le titre des fils ou torons longitudinaux dans la portion centrale peut être supérieur ou égal à 96k.

Dans un exemple de réalisation, chacune de la première et de la deuxième peau peut présenter du côté opposé à la portion centrale un tissage bidimensionnel en surface. Ainsi, la surface de la pièce en matériau composite comprenant une telle préforme sera plus lisse.

Dans un exemple de réalisation, les fils ou torons longitudinaux peuvent être des fils ou torons de chaîne et les fils ou torons transversaux peuvent être des fils ou torons de trame.

L'invention a aussi pour objet une pièce en matériau composite à renfort fibreux densifié par une matrice comprenant une préforme fibreuse telle que celle présentée ci-avant, la pièce ayant une première paroi et une deuxième paroi formées par la première peau et la deuxième peau de la préforme fibreuse entre lesquelles s'étend un élément de raidissement formé par la portion centrale de ladite préforme. L'élément de raidissement permet de reprendre les efforts s'exerçant sur la pièce en augmentant la raideur de celle-ci.

Dans un exemple de réalisation, la pièce peut constituer une aube de turbomachine aéronautique, la première paroi et la deuxième paroi correspondant respectivement à une face intrados et à une face extrados de l'aube. L'aube peut en particulier constituer une aube directrice d'entrée ou de sortie de turbomachine aéronautique. L'emploi d'une préforme fibreuse selon l'invention est avantageux pour cette application car une telle aube présente des fonctions structurales pour le moteur, entre un coeur de celui-ci et un carénage externe. L'élément de raidissement augmente la tenue mécanique de l'aube en traction et en compression. L'aube peut ainsi être creuse, et comprendre deux cavités qui s'étendent longitudinalement de part et d'autre de l'élément de raidissement, ce qui permet de réduire sa masse par rapport à une aube pleine.

Dans un exemple de réalisation, l'aube peut comprendre une paire de brides centrale et au moins une paire de brides latérale à au moins une extrémité longitudinale, la paire de brides centrale étant formée à partir d'une déliaison ménagée dans la portion centrale de la préforme fibreuse et la paire de brides latérale étant formée par prolongement de la première peau et de la deuxième peau de la préforme fibreuse. Une telle déliaison peut être obtenue en omettant localement de lier entre elles des couches de fils adjacentes (ici de fils longitudinaux), ce qui permet un dépliage des parties de préforme fibreuse adjacentes à la déliaison. Cette caractéristique permet d'obtenir une continuité du renfort fibreux de la pièce jusqu'aux brides de fixation de l'aube, ce qui en augmente la fiabilité et la tenue mécanique.

Dans un exemple de réalisation, l'aube peut comprendre un profil aérodynamique s'étendant transversalement entre un bord d'attaque et un bord de fuite, le bord d'attaque et/ou le bord de fuite étant formé par repli de la première ou de la deuxième peau de la préforme fibreuse sur la deuxième ou la première peau de la préforme fibreuse. On peut ainsi obtenir un bord d'attaque et/ou de fuite qui présente une forme conforme aux exigences et un bon état de surface. En outre, en réalisant le bord d'attaque et/ou le bord de fuite de la sorte, on réduit le risque d'ouverture du bord d'attaque et/ou de fuite en cas d'impact ou de fortes vibrations.

Dans un exemple de réalisation, une partie d'extrémité de la première ou de la deuxième peau repliée peut être logée dans une déliaison ménagée dans la deuxième ou dans la première peau. On peut ainsi masquer l'extrémité de la peau qui est repliée à l'intérieur de la déliaison ménagée dans l'autre peau, afin d'obtenir un bon état de surface sur la face intrados et/ou extrados de l'aube. De même, en réalisant le bord d'attaque et/ou le bord de fuite de la sorte, on réduit le risque d'ouverture du bord d'attaque et/ou de fuite en cas d'impact ou de fortes vibrations.

Dans un exemple de réalisation, l'aube peut comprendre un profil aérodynamique s'étendant transversalement entre un bord d'attaque et un bord de fuite, le bord d'attaque et/ou le bord de fuite étant formé par un tissu rapporté sur la première et la deuxième peau de la préforme fibreuse.

### Brève description des dessins

D'autres caractéristiques et avantages de la présente invention ressortiront de la description faite ci-dessous, en référence aux dessins annexés qui en illustrent des exemples de réalisation dépourvus de tout caractère limitatif. Sur les figures :
[Fig. 1] La figure 1 montre une pièce en matériau composite selon un mode de réalisation de l'invention.
[Fig. 2] La figure 2 montre un exemple d'armure de tissage selon un plan transversal d'une préforme fibreuse selon un mode de réalisation de l'invention.
[Fig. 3] La figure 3 est une vue très schématique en coupe longitudinale d'une turbomachine aéronautique.
[Fig. 4] La figure 4 est une vue schématique d'une aube directrice d'entrée de turbomachine aéronautique.
[Fig. 5] La figure 5 montre une vue en coupe longitudinale de l'aube de la figure 4 au niveau d'une de ses brides de fixation.
[Fig. 6] La figure 6 montre une vue en coupe longitudinale de l'aube de la figure 4 au niveau d'une autre de ses brides de fixation.
[Fig. 7] La figure 7 montre une première façon de former un bord d'attaque ou un bord de fuite d'une aube de turbomachine aéronautique à partir d'une préforme fibreuse selon différents modes de réalisation de l'invention.
[Fig. 8] La figure 8 montre une deuxième façon de former un bord d'attaque ou un bord de fuite d'une aube de turbomachine aéronautique à partir d'une préforme fibreuse selon différents modes de réalisation de l'invention.
[Fig. 9] La figure 9 montre une première façon de former un bord d'attaque ou un bord de fuite d'une aube de turbomachine aéronautique à partir d'une préforme fibreuse selon différents modes de réalisation de l'invention.

### Description des modes de réalisation

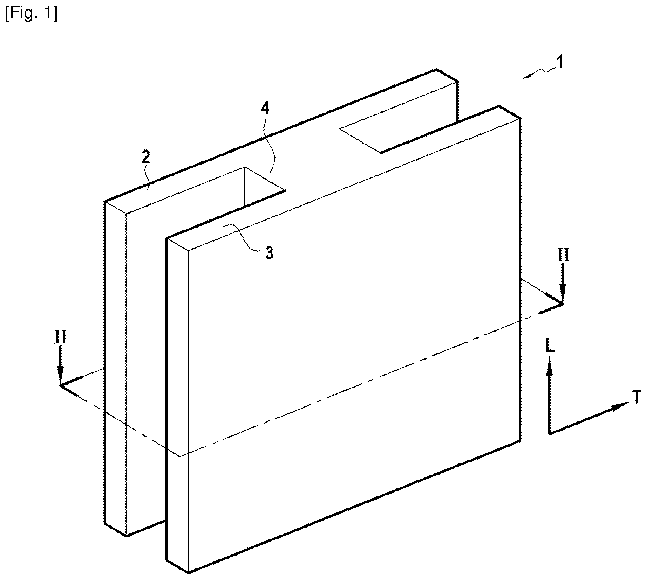

La figure 1 montre un exemple de pièce en matériau composite comprenant un renfort fibreux densifié par une matrice, dont le renfort fibreux peut être obtenu à partir d'une préforme fibreuse selon l'invention. La pièce 1 comprend une première paroi 2, une deuxième paroi 3 et un élément de raidissement 4 s'étendant entre la première paroi 2 et la deuxième paroi 3. L'élément de raidissement 4 prend la forme d'une poutre qui s'étend ici selon une direction longitudinale L de la pièce 1 entre les parois 2 et 3. Chaque paroi 2, 3 s'étend selon la direction longitudinale L et selon une direction transversale T perpendiculaire à la direction longitudinale L.

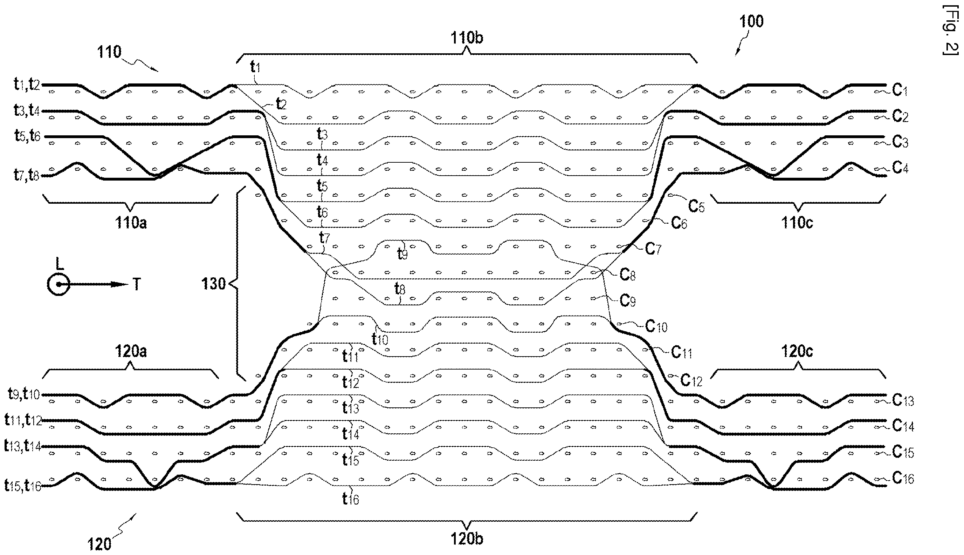

La figure 2 montre une vue en coupe transversale d'une préforme fibreuse 100 selon un mode de réalisation de l'invention utilisée pour former le renfort fibreux de la pièce de la figure 1. La préforme 100 comprend une première peau 110 destinée à former ici la première paroi 2 de la pièce 1, et une deuxième peau 120 destinée à former ici la deuxième paroi 3 de la pièce 1. La première peau 110 et la deuxième peau 120 sont reliées par une portion centrale 130 destinée à former l'élément de raidissement 4 de la pièce 1.

Sur la figure 2 sont représentées des couches c₁-c₁₆ de fils ou torons de chaîne (longitudinaux) et les trajets de fils ou torons de trame t₁-t₁₆ (transversaux). Par souci de simplification, on parlera de fils de chaîne et de fils de trame dans la suite de la description. La figure 2 montre ainsi un plan de trame de la préforme fibreuse 100. Les fils de trame lient entre eux des fils de chaîne appartenant à des couches de fils de chaîne différentes, exception faite de fils de trame qui peuvent être présents en surface pour réaliser un tissage bidimensionnel et de la présence éventuelle de déliaisons locales entre couches de fils de chaîne adjacentes. Différentes armures de tissage 3D ou multi-couches peuvent être utilisées, telles que des armures interlock, multi-satin ou multi-toile, par exemple, comme décrit dans le document WO 2006/136755.

La première peau 110 comprend ici quatre couches de fils de chaîne c₁-c₄, qui sont liées par des fils de trame t₁-t₈. La deuxième peau 120 comprend de manière similaire quatre couches de fils de chaîne c₁₃-c₁₆, qui sont liées par des fils de trame t₉-t₁₆. La portion centrale comprend quant à elle huit couches de fils de chaîne c₅-c₁₂. On notera qu'il y a, dans la première peau 110 et dans la deuxième peau 120, deux fois plus de fils de trame que de couches de fils de chaîne car les fils de trame sont tissés par paires dans certaines parties des peaux 110 et 120.

La première peau 110 peut être divisée en trois parties 110a, 110b et 110c le long de la direction transversale. La première partie 110a et la troisième partie 110c constituent des parties libres de la première peau 110 qui sont situées de part et d'autre de la portion centrale 130. Dans la première 110a et dans la troisième partie 110c, les fils de trame sont tissés par paires. Ainsi, par exemple, les fils de trame t₁ et t₂ sont tissés ensemble dans la partie 110a et dans la partie 110c, c'est-à-dire qu'ils suivent le même trajet. En particulier, dans les parties 110a et 110c, le tissage peut être de type interlock. On notera que sur la surface de la première peau 110 opposée à la portion centrale 130, et dans les parties 110a et 110c le tissage des fils de trame t₁ et t₂ est bidimensionnel de façon à conférer un état de surface lisse à la pièce en matériau composite.

De manière similaire, la deuxième peau 120 peut être divisée en trois parties 120a, 120b et 120c le long de la direction transversale T. La première partie 120a et la troisième partie 120c constituent des parties libres de la deuxième peau 120 qui sont situées de part et d'autre de la portion centrale 130. Dans la première 120a et dans la troisième partie 120c, les fils de trame sont tissés par paires. Ainsi, par exemple, les fils de trame t₁₅ et t₁₆ sont tissés ensemble dans la partie 120a et dans la partie 120c, c'est-à-dire qu'ils suivent le même trajet. En particulier, dans les parties 120a et 120c, le tissage peut être de type interlock. On notera que sur la surface de la deuxième peau 120 opposée à la portion centrale 130, et dans les parties 120a et 120c le tissage des fils de trame t₁₅ et t₁₆ est bidimensionnel de façon à conférer un état de surface lisse à la pièce en matériau composite.

Dans l'exemple illustré, les fils de trame de chaque paire de fils de trame t₁-t₂, t₃-t₄, t₅-t₆ et t₇-t₈ sont séparés en deux fils unitaires au niveau de la portion centrale 130, et généralement de part et d'autre de celle-ci. Une fois séparés, les fils unitaires sont tissés séparément avec des fils de chaîne dans la partie 110b et dans la portion centrale 130. Par « tissés séparément » on entend que les fils ne suivent plus le même trajet. La séparation des paires (ou dédoublement des paires) permet ainsi de doubler le nombre de fils de trame disponibles au niveau de la portion centrale pour pouvoir tisser celle-ci avec des couches de fils de chaîne supplémentaires. Ainsi, les fils de trame t₁ à t₄ sont tissés respectivement avec les couches de fils de chaîne c₁ à c₄ dans la partie 110b de la première peau 110, alors que les fils de trame t₅ à t₈ sont tissés respectivement avec les couches de fils de chaîne c₅, c₆, c₈ et c₉ dans la portion centrale 130. Une partie des fils de trame unitaires de la première peau 110 sont tissés avec des couches de fils de chaîne de la première peau 110, et une autre partie des fils de trame unitaires de la première peau 110 sont tissés avec des couches de fils de chaîne de la portion centrale 130.

Dans l'exemple illustré, les fils de trame de chaque paire de fils de trame t₉-t₁₀, t₁₁-t₁₂, t₁₃-t₁₄ et t₁₅-t₁₆ sont séparés en deux fils unitaires au niveau de la portion centrale 130, et généralement de part et d'autre de celle-ci. Une fois séparés, les fils unitaires sont tissés séparément avec des fils de chaîne dans la partie 120b et dans la portion centrale 130. Ainsi, les fils de trame t₁₃ à t₁₆ sont tissés respectivement avec les couches de fils de chaîne c₁₃ à c₁₆ dans la partie 120b deuxième peau 120, alors que les fils de trame t₉ à t₁₂ sont tissés respectivement avec les couches de fils de chaîne c₇, c₁₀ à c₁₂ dans la portion centrale. Une partie des fils de trame unitaires de la deuxième peau 120 sont tissés avec des couches de fils de chaîne de la deuxième peau 120, et une autre partie des fils de trame unitaires de la deuxième peau 120 sont tissés avec des couches de fils de chaîne de la portion centrale 130.

Dans l'exemple illustré, les fils de trame unitaires obtenus par dédoublement des paires de fils de trame sont tissés chacun avec une seule couche de fils de chaîne différente dans les parties 110b et 120b et dans la portion centrale 130.

Dans l'exemple illustré, les fils de trame unitaires t₇ et t₈ provenant de la première portion 110 croisent le fil de trame t₉ provenant de la deuxième portion 120 dans la portion centrale 130. Ce croisement permet ici que les couches de fils de chaîne c₇, c₈ et c₉ soient liées à la première peau 110 par les fils de trame t₇ et t₈, et à la deuxième peau 120 par le fil de trame t₉. Bien entendu, d'autres armures de tissage peuvent être envisagées en conservant le croisement, au moins deux fois, de fils de trame provenant de la première 110 et de la deuxième 120 peau dans la portion centrale 130 afin d'assurer la cohésion de la préforme 100. Ainsi, dans cet exemple, une partie seulement des fils de trame unitaires provenant de la première peau 110 croise une partie seulement des fils de trame unitaires provenant de la deuxième peau 120 ; les autres fils de trame unitaires étant tissés avec des couches de fils de chaîne différentes sans se croiser entre eux.

Dans l'exemple illustré, il y a quatre fils de chaîne par colonne dans la première peau 110 et dans la deuxième peau 120, soit huit fils par colonne au niveau des parties libres 110a, 120a, 110c, 120c des peaux. Le nombre de fils de chaînes d'une même colonne de chaîne est ici progressivement augmenté pour atteindre seize fils de chaîne par colonne dans la préforme au niveau de la portion centrale 130. Dans cet exemple, les fils de trame des paires de fils de trame sont séparés au niveau de colonnes de chaîne différentes, c'est-à-dire à des emplacements différents le long de la direction transversale T, cela permet une introduction progressive des nouveaux fils de chaîne et un tissage plus aisé.

Il peut être avantageux que le titre (c'est-à-dire nombre de filaments moyen constituant les fils) des fils de chaîne des couches c₅ à c₁₂ dans la portion centrale 130 soit supérieur au titre des fils de chaîne des couches c₁ à c₄ et c₁₃ à c₁₆ dans les peau 110 et 120, afin d'augmenter la fonction de raidissement de la portion centrale 130 dans une pièce en matériau composite.

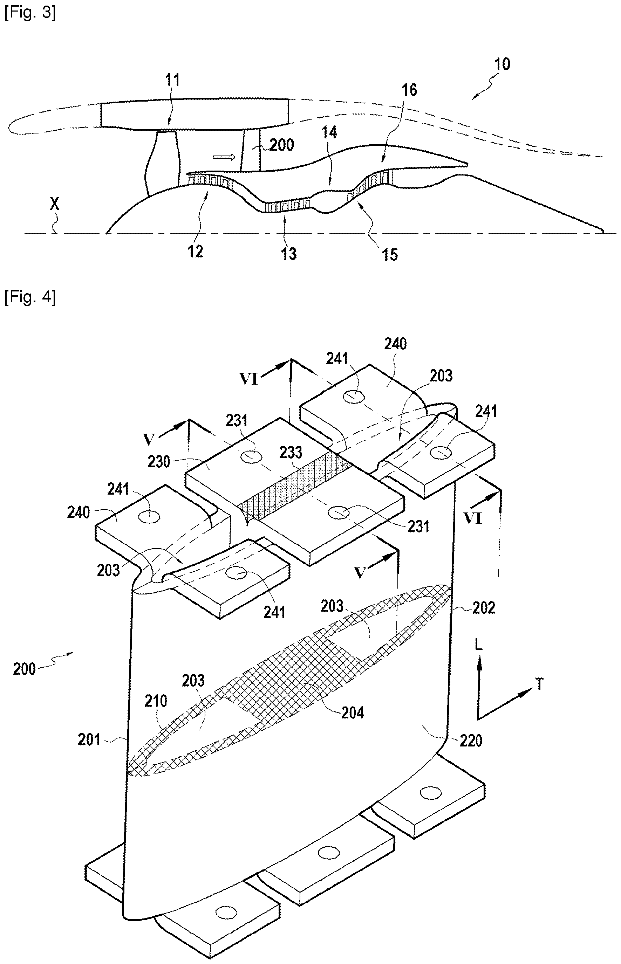

La figure 3 montre une vue schématique en coupe longitudinale d'un turboréacteur à double flux 10 centré sur l'axe X. Il comporte, d'amont en aval :
une soufflante 11, un compresseur basse pression 12, un compresseur haute pression 13, une chambre de combustion 14, une turbine haute pression 15, et une turbine basse pression 16. A l'entrée du turboréacteur 10, le flux d'air entrant dans la soufflante 11 est divisé en un flux primaire ou flux chaud, et en un flux secondaire ou flux froid. Le canal d'écoulement du flux secondaire comprend classiquement un redresseur muni d'aubes directrices de sortie 200 (ou « OGV » pour « Outlet Guide Vane ») disposées en aval de la soufflante 11, qui ont notamment pour fonction de redresser le flux froid en sortie de la soufflante 11 pour en tirer le maximum de poussée. Ces aubes 200 ont également une fonction structurale et doivent notamment être capables de supporter des efforts exercés par le moteur en fonctionnement, ou un choc du à l'ingestion d'un objet par la soufflante 11, ou encore le détachement d'une aube de la soufflante 11. Ainsi, ces aubes 200 doivent à la fois présenter des propriétés mécaniques satisfaisantes tout en étant suffisamment légères pour améliorer le rendement propulsif du moteur.

Un exemple d'utilisation d'une préforme 100 selon un mode de réalisation de l'invention pour fabriquer une aube de turbomachine aéronautique en matériau composite, notamment une aube directrice de sortie 200, va à présent être décrit en lien avec les figures 4 à 9.

La figure 4 montre de façon très schématique une aube directrice de sortie 200 d'une turbomachine aéronautique. L'aube 200 s'étend selon la direction longitudinale L, et selon la direction transversale T entre un bord d'attaque 201 et un bord de fuite 202. Elle présente en outre une face intrados 210 et une face extrados 220. A chacune de ses extrémités longitudinales, l'aube 200 présente une paire de brides centrale 230 et deux paires de brides latérales 240 qui permettent sa fixation dans le moteur par le biais de trous de fixation 231, 241. L'aube 200 est creuse et comprend deux cavités longitudinales 203 débouchant à chaque extrémité longitudinale de l'aube 200. Les cavités longitudinales sont séparées par un élément de raidissement 204 qui s'étend entre les faces intrados 210 et extrados 220 le long de la direction longitudinale L.

L'aube 200 est en matériau composite à renfort fibreux densifié par une matrice. Le renfort fibreux de l'aube 200 (illustré dans une coupe à mi-hauteur sur l'aube 200 de la figure 4) est ici obtenu à partir d'une préforme fibreuse 100 telle que celle illustrée sur la figure 2. En particulier, la première 110 et la deuxième 120 peaux de la préforme fibreuse 100 forment les faces intrados et extrados de l'aube 200, et la portion centrale 130 de la préforme 100 forme l'élément de raidissement 204. Les peaux 110 et 120 de la préforme fibreuse 100 sont jointes à leurs extrémités libres afin de former les bords de l'aube 200.

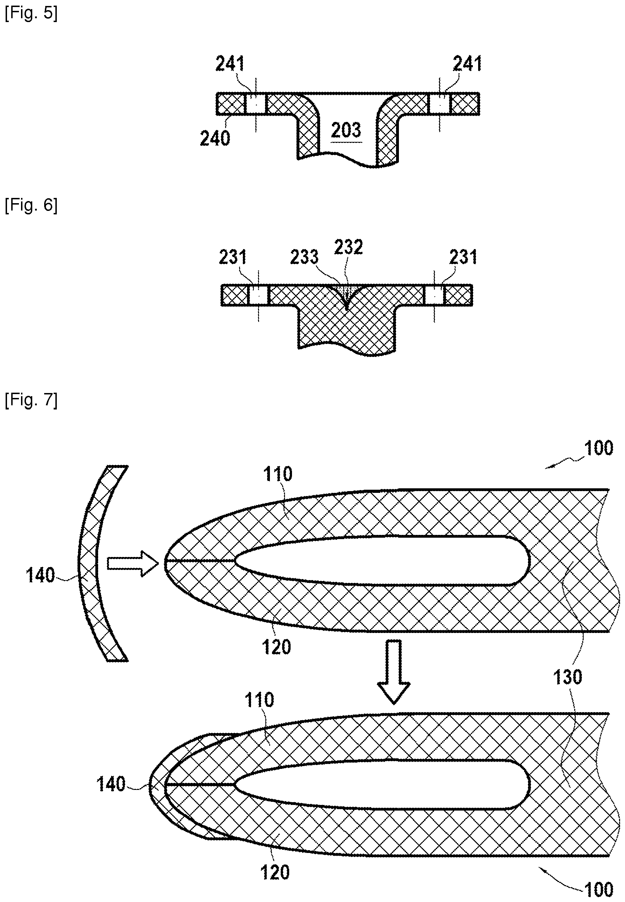

La figure 5 montre une vue en coupe longitudinale du renfort fibreux de l'aube 200 au niveau de la paire de brides centrale 230. On peut voir que le renfort fibreux est continu entre l'élément de raidissement 204 et les extrémités des brides de la paire de brides 230. La paire de brides centrale 230 est en effet obtenu à partir d'une déliaison 232 ménagée dans la préforme fibreuse 100 au cours de son tissage. Pour obtenir une telle déliaison, on a omis volontairement de tisser entre elles des couches de fils longitudinaux par des fils transversaux de façon à pouvoir déplier la préforme. Afin de combler l'espace créé par le dépliage des portions déliées de la préforme fibreuse, un insert 233 peut être placé au niveau de la déliaison 232.

La figure 6 montre une vue en coupe longitudinale du renfort fibreux de l'aube 200 au niveau d'une paire de brides latérale 240. On peut voir que le renfort fibreux est continu entre les faces intrados et extrados, et les extrémités des brides de la paire de brides 240. La paire de brides latérales 240 est en effet obtenue par prolongement des première 110 et deuxième 120 peau de la préforme fibreuse 100 et dépliage de celles-ci au-delà de l'extrémité de l'aube 200.

Sur les figures 7 à 9 on a représenté différentes façons de former le bord d'attaque 201 ou le bord de fuite 202 de l'aube 200 à partir de préformes fibreuses selon différents modes de réalisation de l'invention. Les figures 7 à 9 montrent schématiquement des coupes transversales de préformes fibreuses.

Dans le mode de réalisation illustré sur la figure 7, la préforme fibreuse 100 utilisée est similaire à celle illustrée sur la figure 2. Pour former le bord de l'aube 200, on rapporte un tissu 140 sur les extrémités jointes des première 110 et deuxième 120 peaux.

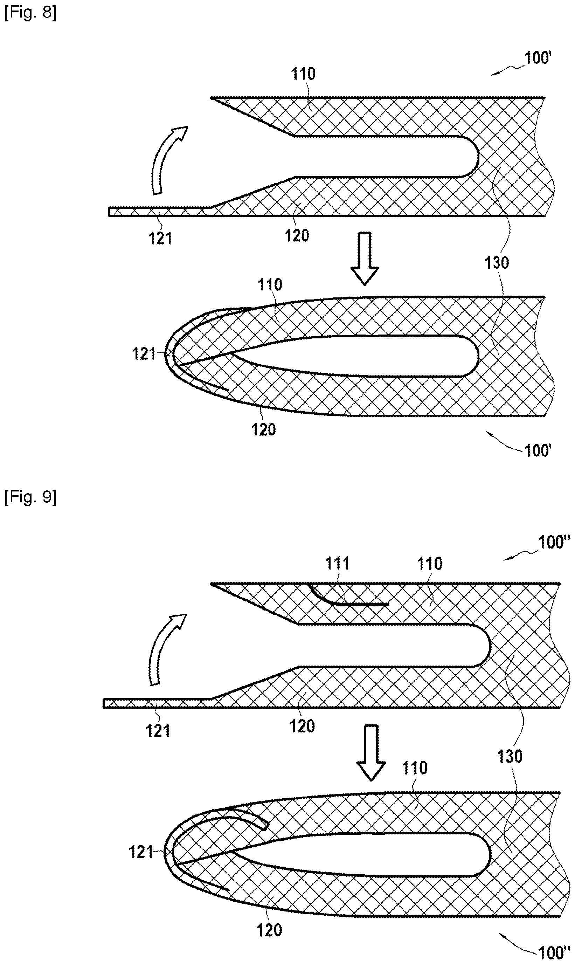

Dans le mode de réalisation illustré sur la figure 8, la préforme fibreuse 100' utilisée comporte toujours une première peau 110 et une deuxième peau 120, comme pour la préforme 100 de la figure 2. La deuxième peau 120 présente, du côté du bord à former, une longueur plus importante dans la direction transversale que la première peau 110. La partie 121 de la deuxième peau 120 qui s'étend au-delà de la première peau peut présenter un tissage bidimensionnel, par exemple de type toile. Pour former le bord, on replie la partie 121 de la deuxième peau 120 sur la première peau 110 afin de recouvrir la frontière entre les deux peaux 110 et 120.

Dans le mode de réalisation illustré sur la figure 9, la préforme fibreuse 100" est similaire à la préforme fibreuse 100' en ce que la deuxième peau 120 présente une partie 121 qui s'étend au-delà de la première peau 110 dans la direction transversale. La partie 121 peut présenter un tissage bidimensionnel, par exemple de type toile. En outre, la première peau 110 comporte ici une déliaison 111 débouchant en surface et qui s'étend selon la direction transversale à l'intérieur de la première peau 110. Pour former le bord, on replie la partie 121 de la deuxième peau 120 sur la première peau 110, et on insère la partie 121 à l'intérieur de la déliaison 111. Ainsi, l'extrémité de la partie 121 est logée dans la première peau 110 ce qui confère un état de surface plus régulier à la face de l'aube 200 qui sera formée par la première peau 110.

On notera qu'il est possible de recouvrir le bord d'attaque 201 de l'aube 200 d'un clinquant métallique pour augmenter la solidité de l'aube 200 en cas d'impact avec un objet.

De manière générale, les fibres de la préforme fibreuse sont en un matériau choisi en fonction de l'application envisagée, par exemple en verre, en carbone ou en céramique.

La densification de la préforme fibreuse par une matrice pour obtenir une pièce en matériau composite est réalisée en maintenant la préforme dans un outillage de conformation au moins jusqu'à rigidification (ou consolidation) de la préforme. Des vessies gonflables peuvent être utilisées pour former des parties creuses dans la pièce et empêcher leur remplissage par une matrice. En particulier, des vessies gonflables peuvent être utilisées pour former les parties creuses 203 de l'aube 200.

La matrice est de nature choisie en fonction de l'application envisagée, par exemple une matrice organique obtenue notamment à partir d'une résine précurseur de matrice polymère telle qu'une résine époxyde, bismaléimide ou polyimide, ou une matrice en carbone ou une matrice en céramique.

Dans le cas d'une matrice organique, la préforme fibreuse est imprégnée par une composition contenant la résine précurseur de matrice, avant conformation dans un outillage, ou après conformation, l'imprégnation étant dans ce dernier cas réalisée par exemple par infusion ou un procédé de type RTM (« Resin Transfer Molding ») dans un moule adapté. Dans le cas d'une matrice en carbone ou en céramique, la densification pourra être réalisée par infiltration chimique en phase gazeuse, ou CVI (« Chemical Vapour Infiltration ») ou par imprégnation par une composition liquide contenant une résine précurseur de carbone ou de céramique et traitement thermique de pyrolyse ou céramisation du précurseur, ces procédés étant bien connus en soi.

## Revendications

1. Préforme fibreuse (100) destinée à former le renfort fibreux d'une pièce en matériau composite (1) à renfort fibreux densifié par une matrice, la préforme fibreuse étant en une seule pièce et obtenue par tissage tridimensionnel d'une pluralité de fils ou torons longitudinaux (c₁-c₁₆) s'étendant dans une direction correspondant à la direction longitudinale (L) de la pièce avec une pluralité de fils ou torons transversaux (t₁-t₁₆), la préforme comprenant une première peau (110), une deuxième peau (120), et une portion centrale (130) reliant la première peau à la deuxième peau, la portion centrale étant destinée à former un élément de raidissement (4) de la pièce le long de la direction longitudinale, **caractérisée en ce que**, dans un plan transversal de la préforme :
- des fils ou torons transversaux de la première peau (t₁-t₈) et de la deuxième peau (t₉-t₁₆) sont tissés par paires dans la première peau et dans la deuxième peau de part et d'autre de la portion centrale,
- les fils ou torons d'au moins une première paire de fils ou torons transversaux (t₅-t₆, t₇-t₈) de la première peau sont séparés en deux fils ou torons unitaires au niveau de la portion centrale, lesdits fils ou torons unitaires étant tissés séparément avec des fils ou torons longitudinaux dans ladite portion,
- les fils ou torons d'au moins une deuxième paire de fils ou torons transversaux (t₉-t₁₀, t₁₁-t₁₂) de la deuxième peau sont séparés en deux fils ou torons unitaires au niveau de la portion centrale, lesdits fils ou torons unitaires étant tissés séparément avec des fils ou torons longitudinaux dans ladite portion, et
- au moins un fil ou toron (t₇, t₈) de la première paire et au moins un fil ou toron de la deuxième paire (t₉) se croisent au moins deux fois dans la portion centrale.

2. Préforme fibreuse selon la revendication 1, dans laquelle au moins une partie des fils ou torons longitudinaux (c₅-c₁₂) présents dans la portion centrale (130) présentent un titre supérieur au titre des fils ou torons longitudinaux (c₁-c₄, c₁₃-c₁₆) présents dans la première (110) et la deuxième peau (120).

3. Préforme fibreuse selon la revendication 1 ou 2, dans laquelle chacune de la première (110) et de la deuxième peau (120) présente du côté opposé à la portion centrale (130) un tissage bidimensionnel en surface.

4. Préforme fibreuse selon l'une quelconque des revendications 1 à 3, dans laquelle les fils ou torons longitudinaux (c₁-c₁₆) sont des fils ou torons de chaîne et les fils ou torons transversaux (t₁-t₁₆) sont des fils ou torons de trame.

5. Pièce (1) en matériau composite à renfort fibreux densifié par une matrice comprenant une préforme fibreuse (100) selon l'une quelconque des revendications 1 à 4, la pièce ayant une première paroi (2) et une deuxième paroi (3) formées par la première peau (110) et la deuxième peau (120) de la préforme fibreuse (100) entre lesquelles s'étend un élément de raidissement (4) formé par la portion centrale (130) de ladite préforme.

6. Pièce selon la revendication 5, constituant une aube de turbomachine aéronautique (200), la première paroi (2) et la deuxième paroi (3) correspondant respectivement à une face intrados (210) et à une face extrados (220) de l'aube.

7. Pièce selon la revendication 6, comprenant une paire de brides centrale (230) et au moins une paire de brides latérale (240) à au moins une extrémité longitudinale, la paire de brides centrale étant formée à partir d'une déliaison (232) ménagée dans la portion centrale (130) de la préforme fibreuse (100) et la paire de brides latérale étant formée par prolongement de la première peau (110) et de la deuxième peau (120) de la préforme fibreuse.

8. Pièce selon la revendication 6 ou 7, comprenant un profil aérodynamique s'étendant transversalement entre un bord d'attaque (201) et un bord de fuite (202), le bord d'attaque et/ou le bord de fuite étant formé par repli de la première (110) ou de la deuxième (120) peau de la préforme fibreuse (100) sur la deuxième (120) ou la première (110) peau de la préforme fibreuse.

9. Pièce selon la revendication 8, dans laquelle une partie d'extrémité de la première (110) ou de la deuxième (120) peau repliée est logée dans une déliaison (111) ménagée dans la deuxième (120) ou dans la première (110) peau.

10. Pièce selon la revendication 6 ou 7, comprenant un profil aérodynamique s'étendant transversalement entre un bord d'attaque (201) et un bord de fuite (202), le bord d'attaque et/ou le bord de fuite étant formé par un tissu rapporté (140) sur la première (110) et la deuxième (120) peau de la préforme fibreuse (100).

## Patentansprüche

1. Faser-Vorform (100), die dazu bestimmt ist, die Faserverstärkung eines Teils aus Verbundmaterial (1) mit einer durch eine Matrix verdichteten Faserverstärkung zu bilden, wobei die Faser-Vorform ein einzelnes Teil ist und durch dreidimensionale Verwebung von mehreren Längsfäden oder -litzen (c₁-c₁₆), die sich in einer Richtung entsprechend einer Längsrichtung (L) des Teils erstrecken, mit mehreren Querfäden oder -litzen (t₁-t₁₆) erhalten wird, wobei die Vorform eine erste Haut (110), eine zweite Haut (120) und eine zentrale Sektion (130) umfasst, welche die erste Haut mit der zweiten Haut verbindet, wobei die zentrale Sektion dazu bestimmt ist, ein Versteifungselement (4) des Teils entlang der Längsrichtung zu bilden, **dadurch gekennzeichnet, dass** in einer Querebene der Vorform:
- die Querfäden oder -litzen der ersten Haut (t₁-t₈) und der zweiten Haut (t₉-t₁₆) auf beiden Seiten der zentralen Sektion in der ersten Haut und in der zweiten Haut paarweise verwebt sind,
- die Fäden oder Litzen von zumindest einem ersten Paar von Querfäden oder -litzen (t₅-t₆, t₇-t₈) der ersten Haut im Bereich der zentralen Sektion in zwei einzelne Fäden oder Litzen getrennt sind, wobei die einzelnen Fäden oder Litzen separat mit den Längsfäden oder -litzen in der Sektion verwebt sind,
- die Fäden oder Litzen von zumindest einem zweiten Paar von Querfäden oder -litzen (t₉-t₁₀, t₁₁-t₁₂) der zweiten Haut im Bereich der zentralen Sektion in zwei einzelne Fäden oder Litzen getrennt sind, wobei die einzelnen Fäden oder Litzen separat mit den Längsfäden oder -litzen in der Sektion verwebt sind, und
- zumindest ein Faden oder eine Litze (t_{7,} t₈) des ersten Paars und zumindest ein Faden oder eine Litze des zweiten Paars (t₉) sich in der zentralen Sektion zumindest zweimal kreuzen.

2. Faser-Vorform nach Anspruch 1, wobei zumindest ein Teil der Längsfäden oder -litzen (c₅-c₁₂), die in der zentralen Sektion (130) vorliegen, einen höheren Titer aufweist als den Titer der Längsfäden oder -litzen (c₁-c₄, c₁₃-c₁₆), die in der ersten (110) und der zweiten Haut (120) vorliegen.

3. Faser-Vorform nach Anspruch 1 oder 2, wobei jede von der ersten (110) und der zweiten Haut (120) auf der der zentralen Sektion (130) gegenüberliegenden Seite ein bidimensionales Gewebe an der Oberfläche aufweist.

4. Faser-Vorform nach einem der Ansprüche 1 bis 3, wobei die Längsfäden oder - litzen (c₁-c₁₆) Kettfäden oder -litzen sind und die Querfäden oder -litzen (t₁-t₁₆) Schussfäden oder -litzen sind.

5. Teil (1) aus Verbundmaterial mit einer durch eine Matrix verdichteten Faserverstärkung, umfassend eine Faser-Vorform (100) nach einem der Ansprüche 1 bis 4, wobei das Teil eine erste Wand (2) und eine zweite Wand (3) aufweist, die durch die erste Haut (110) und die zweite Haut (120) der Faser-Vorform (100) gebildet werden und zwischen welchen sich ein Versteifungselement (4) erstreckt, das durch die zentrale Sektion (130) der Vorform gebildet wird.

6. Teil nach Anspruch 5, das eine Schaufel einer Flugzeug-Turbomaschine (200) darstellt, wobei die erste Wand (2) und die zweite Wand (3) jeweils einer Druckseitenfläche (210) und einer Saugseitenfläche (220) der Schaufel entsprechen.

7. Teil nach Anspruch 6, umfassend ein zentrales Paar von Flanschen (230) und zumindest ein seitliches Paar von Flanschen (240) an zumindest einem Längsende, wobei das zentrale Paar von Flanschen ausgehend von einer Trennung (232), die in die zentrale Sektion (130) der Faser-Vorform (100) eingebracht wurde, gebildet wird, und das seitliche Paar von Flanschen durch Verlängerung der ersten Haut (110) und der zweiten Haut (120) der Faser-Vorform gebildet wird.

8. Teil nach Anspruch 6 oder 7, umfassend ein aerodynamisches Profil, das sich quer zwischen einer Vorderkante (201) und einer Hinterkante (202) erstreckt, wobei die Vorderkante und/oder die Hinterkante durch Umschlagen der ersten (110) oder der zweiten (120) Haut der Faser-Vorform (100) auf die zweite (120) oder die erste (110) Haut der Faser-Vorform gebildet wird/werden.

9. Teil nach Anspruch 8, wobei ein umgeschlagener Endteil der ersten (110) oder der zweiten (120) Haut in einer Trennung (111) aufgenommen ist, die in die zweite (120) oder in die erste (110) Haut eingebracht wurde.

10. Teil nach Anspruch 6 oder 7, umfassend ein aerodynamisches Profil, das sich quer zwischen einer Vorderkante (201) und einer Hinterkante (202) erstreckt, wobei die Vorderkante und/oder die Hinterkante durch ein Gewebe (140) gebildet wird/werden, das an die erste (110) und die zweite (120) Haut der Faser-Vorform (100) angestückelt wird.

## Claims

1. Fibrous preform (100) for forming the fibrous reinforcement of a composite material part (1) with fibrous reinforcement densified by a matrix, the fibrous preform being made as a single piece and obtained by three-dimensional weaving of a plurality of longitudinal threads or strands, (c₁-c₁₆) extending in a direction corresponding to the longitudinal direction (L) of the part with a plurality of transverse threads or strands (t₁-t₁₆), the preform comprising a first skin (110), a second skin (120) and a central portion (130) connecting the first skin to the second skin, the central portion being intended to form a stiffening element (4) of the part in the longitudinal direction, **characterised in that**, in a transverse plane of the preform:
- transverse threads or strands of the first skin (t₁-t₈) and of the second skin (t₉-t₁₆) are woven in pairs in the first skin and in the second skin on either side of the central portion,
- the threads or strands of at least a first pair of transverse threads or strands (t₅-t₆, t₇-t₈) of the first skin are separated into two unitary threads or strands at the central portion, said unitary threads or strands being separately woven with the longitudinal threads or strands in said portion,
- the threads or strands of at least one second pair of transverse threads or strands (t₉-t₁₀, t₁₁-t₁₂) of the second skin are separated into two unitary threads or strands at the central portion, said unitary threads or strands being separately woven with the longitudinal threads or strands in said portion, and
- at least one thread or strand (t₇, t₈) of the first pair and at least one thread or strand of the second pair (t₉) cross at least twice in the central portion.

2. Fibrous preform according to claim 1, wherein at least some of the longitudinal threads or strands (c₅-c₁₂) present in the central portion (130) have a titre greater than the titre of the longitudinal threads or strands (c₁-c₄, c₁₃-c₁₆) present in the first (110) and second skin (120).

3. Fibrous preform according to claim 1 or 2, wherein each of the first (110) and second skin (120) have, on the opposite side to the central portion (130), a two-dimensional weaving at the surface.

4. Fibrous preform according to any one of claims 1 to 3, wherein the longitudinal threads or strands (c₁-c₁₆) are warp threads or strands and the transverse threads or strands (t₁-t₁₆) are weft threads or strands.

5. Part (1) made of composite material with fibrous reinforcement densified by a matrix comprising a fibrous preform (100) according to any one of claims 1 to 4, the part having a first wall (2) and a second wall (3) formed by the first skin (110) and the second skin (120) of the fibrous preform (100) between which extends a stiffening element (4) formed by the central portion (130) of said preform.

6. Part according to claim 5, constituting an aeronautical turbomachine blade (200), the first wall (2) and the second wall (3) corresponding respectively to a pressure face (210) and a suction face (220) of the blade.

7. Part according to claim 6, comprising a pair of central flanges (230) and at least one pair of lateral flanges (240) with at least one longitudinal end, the pair of central flanges being formed from a separation (232) provided in the central portion (130) of the fibrous preform (100) and the pair of lateral flanges being formed by extending the first skin (110) and the second skin (120) of the fibrous preform.

8. Part according to claim 6 or 7, comprising an aerodynamic profile element extending transversely between a leading edge (201) and a trailing edge (202), the leading edge and/or the trailing edge being formed by folding the first (110) or second (120) skin of the fibrous preform (100) over the second (120) or first (110) skin of the fibrous preform.

9. Part according to claim 8, wherein a folded end portion of the first (110) or second (120) skin is housed in a separation (111) provided in the second (120) or in the first (110) skin.

10. Part according to claim 6 or 7, comprising an aerodynamic profile element extending transversely between a leading edge (201) and a trailing edge (202), the leading edge and/or the trailing edge being formed by a fabric (140) added on the first (110) and second (120) skin of the fibrous preform (100).
